(19) **Europäisches Patentamt / European Patent Office / Office européen des brevets**

(11) **EP 3 233 391 B1**

(12) **FASCICULE DE BREVET EUROPEEN**

(45) Date de publication et mention de la délivrance du brevet:
**30.01.2019 Bulletin 2019/05**

(21) Numéro de dépôt: **15820506.2**

(22) Date de dépôt: **18.12.2015**

(51) Int Cl.:
**B25J 9/10** (2006.01)    **B25J 19/00** (2006.01)

(86) Numéro de dépôt international:
**PCT/EP2015/080686**

(87) Numéro de publication internationale:
**WO 2016/097388 (23.06.2016 Gazette 2016/25)**

(54) **DISPOSITIF D'ÉQUILIBRAGE DE CHARGE POUR BRAS ARTICULÉ, APPAREIL ET PROCÉDÉ DE MANIPULATION DE CHARGE ASSOCIÉS**

LASTAUSGLEICHSVORRICHTUNG FÜR EINEN SCHWENKARM, ZUGEHÖRIGE LASTHANDHABUNGSVORRICHTUNG UND VERFAHREN

LOAD-BALANCING DEVICE FOR ARTICULATED ARM, ASSOCIATED LOAD-HANDLING APPARATUS AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1462980**

(43) Date de publication de la demande:
**25.10.2017 Bulletin 2017/43**

(73) Titulaires:
- **Centre National de la Recherche Scientifique (C.N.R.S.)**
  **75016 Paris (FR)**
- **Ecole Centrale De Nantes**
  **44300 Nantes (FR)**
- **Institut National Des Sciences Appliquees**
  **35708 Rennes (FR)**

(72) Inventeurs:
- **BRIOT, Sébastien**
  **44119 Treillieres (FR)**
- **ARAKELYAN, Vigen**
  **35200 Rennes (FR)**

(74) Mandataire: **Lavoix**
**2, place d'Estienne d'Orves**
**75441 Paris Cedex 09 (FR)**

(56) Documents cités:
**EP-A1- 1 154 109     FR-A1- 2 533 284**
**NL-C1- 1 034 141     US-A- 2 545 515**
**US-A- 4 753 128**

**Description**

La présente invention concerne un dispositif d'équilibrage de charge pour un bras articulé propre à recevoir une charge présentant une masse, ainsi qu'un appareil de manipulation de charge et un procédé de manipulation de charges associés.

L'invention s'applique au domaine des bras manipulateurs de charges, par exemple aux bras manipulateurs de charges variables. De tels bras sont robotisés ou manuels.

Il est connu d'avoir recours à des bras articulés pour manipuler des charges. Par exemple, dans le cas des bras robotisés, de tels bras comportent une pluralité de moteurs destinés à actionner les différents segments du bras pour déplacer un effecteur destiné à recevoir une charge.

Il est alors connu d'équiper de tels bras de systèmes d'équilibrage. De tels systèmes d'équilibrage ont notamment pour but de compenser la force de gravité s'exerçant sur le bras, lors de la manipulation de charges.

Lorsque le poids de la charge à déplacer est variable, de tels systèmes d'équilibrage comportent généralement une pluralité de moteurs pour compenser les forces de gravité variables s'exerçant sur le bras.

Les documents EP 1 154 109 A1, FR 2 533 284 A1, US 4 753 128 A1, NL 1 034 141 C1 et US 2 545 515 A décrivent des systèmes d'équilibrage.

Néanmoins, de tels systèmes d'équilibrage ne donnent pas entière satisfaction.

En effet, les moteurs desdits systèmes d'équilibrage présentent généralement une consommation énergétique élevée, par exemple de l'ordre de la dizaine de kilowatts.

La présence de de nombreux moteurs dans de tels systèmes conduit en outre à un coût élevé.

En outre, de tels systèmes d'équilibrage sont généralement des systèmes complexes qui nécessitent la mise en oeuvre de calculateurs pour coordonner en temps réel le fonctionnement des moteurs d'équilibrage, par exemple lors d'un changement de charge en cours de fonctionnement du bras.

Un but de l'invention est donc de proposer un dispositif d'équilibrage moins cher, qui présente une consommation énergétique moindre, et dont le fonctionnement est plus simple.

A cet effet, l'invention a pour objet un dispositif d'équilibrage selon la revendication 1.

En effet, le bras de levier est propre à exercer une force pour compenser le poids de la charge, ladite force dépendant de la masse de la charge à déplacer. La longueur du bras de levier étant ajustable, il n'est pas nécessaire de fournir des moteurs pour compenser en permanence et en temps réel le poids de la charge. La consommation énergétique et le coût du dispositif d'équilibrage sont ainsi réduits.

Suivant d'autres aspects avantageux de l'invention, le dispositif d'équilibrage comporte une ou plusieurs des caractéristiques récitées dans les revendications dépendantes 2 à 4.

En outre, l'invention a pour objet un appareil de manipulation de charges comportant un bras articulé, le bras articulé comprenant un élément fixe et un élément d'entrée mobile, l'appareil de manipulation comportant en outre un dispositif d'équilibrage tel que défini ci-dessus, le système de support du dispositif d'équilibrage étant fixé à l'élément fixe du bras articulé, et l'élément d'actionnement du dispositif d'équilibrage étant fixé à l'élément d'entrée du bras articulé.

Suivant un autre aspect avantageux de l'invention, l'appareil de manipulation de charges comporte la caractéristique suivante :

- le bras articulé présente un facteur d'amplification p qui est fonction de la configuration dudit bras articulé, et en ce que, lorsque le dispositif d'équilibrage compense le poids exercé par la charge sur le bras articulé, le bras de levier présente une longueur d'équilibrage vérifiant la relation :

$$p.g.m_P.l_{LJ} = k.l_{LR}.l_{LS}$$

où g est l'accélération locale de la pesanteur, $m_p$ est la masse de la charge, k est la raideur du ressort, $l_{LR}$ étant la distance entre le premier point du segment libre et la liaison pivot, $l_{LS}$ étant la distance entre le deuxième point du bras de levier et la liaison pivot.

En outre, l'invention a pour objet un procédé de manipulation de charges mettant en oeuvre un appareil de manipulation tel que défini ci-dessus, le procédé comportant une première étape d'équilibrage comprenant les phases de :

- blocage du bras articulé ;
- blocage du système de stockage d'énergie ;
- déblocage du système de support ;
- fixation d'une charge à un effecteur du bras articulé ;
- modification de la longueur du bras de levier pour atteindre la longueur d'équilibrage associée à la charge.

Suivant un autre aspect avantageux de l'invention, le procédé comporte en outre une étape de déplacement de la charge comportant les phases de :

- déblocage du bras articulé ;
- déblocage du système de stockage d'énergie ;
- blocage du bras de levier à la longueur d'équilibrage associée à la charge ;
- blocage de la deuxième liaison glissière du système de support.

L'invention sera mieux comprise à l'aide de la description qui va suivre, donnée uniquement à titre d'exemple non limitatif et faite en se référant aux dessins annexés sur lesquels :

- la figure 1 est une représentation schématique d'un appareil de manipulation de charges selon l'invention ;
- la figure 2 est une représentation schématique d'une partie de l'appareil de la figure 1 ;
- la figure 3 est une représentation schématique de l'appareil de manipulation de la figure 1, au cours d'une première étape de manipulation d'une charge ; et
- la figure 4 est une représentation schématique de l'appareil de manipulation de la figure 1, au cours d'une deuxième étape successive à l'étape de la figure 3.

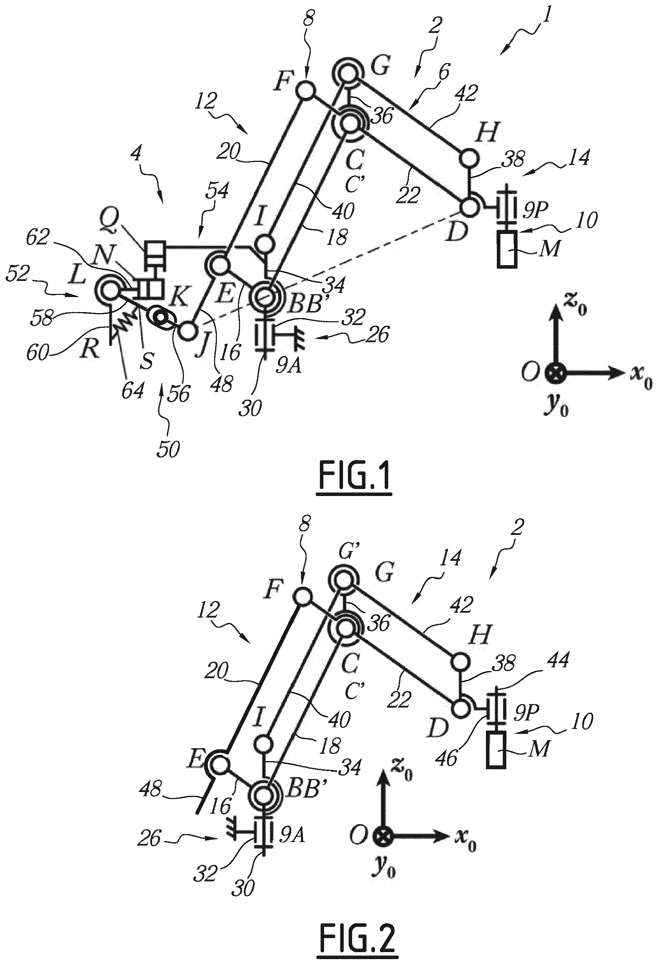

Un appareil de manipulation 1 selon l'invention est représenté sur la figure 1.

L'appareil de manipulation 1 comporte un bras articulé 2 et un dispositif d'équilibrage 4.

L'appareil de manipulation 1 est représenté dans un repère orthonormal $(O, x_0, y_0, z_0)$.

Le plan engendré par les vecteurs $x_0$, $y_0$ est encore appelé « plan horizontal ».

Le plan engendré par les vecteurs $x_0$, $z_0$ est encore appelé « plan vertical ».

La direction du vecteur $y_0$ est encore appelée « axe horizontal ».

La direction du vecteur $z_0$ est encore appelée « axe vertical ».

Le bras articulé 2 et le dispositif d'équilibrage 4 comportent chacun une pluralité de segments 6 rigides. Chaque segment 6 s'étend le long d'un axe correspondant. Chaque segment 6 comporte une première extrémité et une deuxième extrémité, distincte de la première extrémité.

Les axes des segments 6 du bras articulé 2 et du dispositif d'équilibrage 4 appartiennent au plan vertical.

Les segments 6 sont reliés entre eux par des liaisons pivots 8 dont l'axe est l'axe horizontal, et qui sont encore appelées « liaisons horizontales ».

Le bras articulé 2 comporte également des liaisons pivots 9A, 9P dont l'axe est l'axe vertical, et qui sont encore appelées « liaisons verticales ».

Le bras articulé 2 comprend en outre un effecteur 10.

L'effecteur 10 est propre à, ou en d'autres termes adapté à, recevoir une charge M, M' à déplacer.

L'effecteur 10 du bras articulé 2 présente quatre degrés de liberté, à savoir une translation selon chacun des axes du repère, et une rotation autour de l'axe vertical.

Avantageusement, le bras articulé 2 est équilibré statiquement.

Par « bras équilibré statiquement », on entend un système qui reste immobile dans la position dans laquelle il a été placé. En particulier, pour un bras motorisé, le bras est dit « équilibré statiquement » s'il reste immobile dans la position dans laquelle il a été placé quand les moteurs qu'il comporte n'appliquent aucun effort sur ledit bras.

Par exemple, le bras articulé 2 est équilibré statiquement par un ou plusieurs contrepoids et/ou par un ou plusieurs ressorts.

Les segments 6 du bras articulé 2 forment, avec un segment d'actionnement 48 décrit ultérieurement, un pantographe 12. En outre, les segments 6 forment un double parallélogramme 14.

Comme illustré par la figure 1, le pantographe 12 comporte un bras de support proximal 16 et un bras de support distal 18. En outre, le pantographe 12 comporte un segment d'entrée 20 et un bras de sortie 22.

Le bras de support proximal 16, le bras de support distal 18, le segment d'entrée 20 et le bras de sortie 22 sont des segments 6.

Le bras de support proximal 16, le bras de support distal 18, le segment d'entrée 20 et le bras de sortie 22 sont reliés entre eux par des liaisons horizontales 8, notées E, B, B', C et F respectivement.

L'axe de la liaison B' est confondu avec l'axe de la liaison B, et solidaire dudit axe de la liaison B.

L'intersection des axes des liaisons horizontales E, B, C et F avec le plan vertical forme un parallélogramme EBCF.

Le parallélogramme EBCF est tel que l'axe du segment de support proximal 16 et l'axe du bras de sortie 22 sont parallèles. En outre, le parallélogramme EBCF est tel que l'axe du segment de support distal 18 et l'axe du segment d'entrée 20 sont parallèles.

Plus précisément, une deuxième extrémité du bras de support proximal 16 est reliée à un châssis de la liaison horizontale B. En outre, une première extrémité du bras de support distal 18 est reliée à un châssis de la liaison horizontale B'.

Une première extrémité du segment d'entrée 20 est reliée à une première extrémité du bras de support proximal 16 par la liaison horizontale E.

Une deuxième extrémité du segment d'entrée 20 est reliée à une première extrémité du bras de sortie 22 par la liaison horizontale F.

Une deuxième extrémité du bras de support distal 18 est reliée à un point intermédiaire du bras de sortie 22 par la liaison horizontale C.

En outre, et comme cela sera décrit ultérieurement, une deuxième extrémité du segment d'actionnement 48 est solidaire du segment d'entrée 20 pour former un bras d'entrée du pantographe 12.

Comme illustré par la figure 2, le pantographe 12 est disposé de sorte que, au repos, la liaison B est la liaison horizontale 8 la plus basse dudit pantographe 12, et la liaison F est la liaison horizontale 8 la plus haute dudit pantographe 12.

Une partie de la liaison horizontale B, de préférence le châssis de la liaison horizontale B, est reliée à un bâti 26 par l'intermédiaire de la liaison pivot verticale 9A. En outre, une partie de la liaison horizontale B', de préférence le châssis de la liaison horizontale B', est reliée au bâti 26 par l'intermédiaire de la liaison pivot verticale 9A.

Plus précisément, une partie, de préférence le châssis, de chaque liaison horizontale B, B' est solidaire d'un axe 30 de la liaison verticale 9A. En outre, un châssis 32 de la liaison verticale A, mobile en rotation autour de l'axe 30, est solidaire du bâti 26. Les liaisons horizontales B, B' du pantographe 12 sont ainsi fixes par rapport au bâti 26.

La liaison horizontale B du pantographe 12 forme un élément de support du pantographe 12, propre à, ou en d'autres termes adapté à, recevoir les efforts transmis par les bras de support proximal et distal 18, 20, et à retransmettre lesdits efforts au châssis 26.

Le double parallélogramme 14 comporte un premier segment vertical 34, un deuxième segment vertical 36, un troisième segment vertical 38, un premier segment de liaison 40 et un deuxième segment de liaison 42, qui sont des segments 6.

Le premier segment vertical 34, le deuxième segment vertical 36, le premier segment de liaison 40 et le bras de support distal 18 sont reliés entre eux par des liaisons horizontales 8, notées I, G et C'.

L'axe de la liaison C' est confondu avec l'axe de la liaison C, et solidaire dudit axe de la liaison C.

La projection des axes des segments 18, 34, 36 et 40 sur le plan vertical forme un premier parallélogramme IBCG.

Le premier segment de liaison 40 est agencé de sorte que la projection de l'axe correspondant sur le plan vertical est située entre les projections sur ledit plan vertical des axes associés au segment d'entrée 20 et au bras de support distal 18 respectivement.

Plus précisément, une première extrémité du premier segment vertical 34 est reliée à une première extrémité du premier segment de liaison 40 par la liaison horizontale I.

Une deuxième extrémité du premier segment de liaison 40 est reliée à une première extrémité du deuxième segment vertical 36 par la liaison horizontale G.

Une deuxième extrémité du deuxième segment vertical 36 est reliée au point intermédiaire du bras de support distal 18 par la liaison horizontale C'.

En outre, une deuxième extrémité du premier segment vertical 34 est solidaire de l'axe 30 de la liaison verticale A, l'axe du premier segment vertical 34 étant alors l'axe vertical.

Le premier segment vertical 34 forme ainsi un élément fixe du bras articulé 2.

L'axe du deuxième segment vertical 36 est ainsi également l'axe vertical.

En outre, le deuxième segment vertical 36, le bras de sortie 22, le troisième bras vertical 38 et le deuxième bras de liaison 42 reliés entre eux par des liaisons horizontales 8, notées D, H, G', et par la liaison C' précédemment décrite.

L'axe de la liaison G' est confondu avec l'axe de la liaison G, et solidaire de l'axe de la liaison G.

L'intersection des axes des liaisons horizontales G', C', D et H avec le plan vertical forme un deuxième parallélogramme GCDH.

Plus précisément, la première extrémité du deuxième segment vertical 36 est reliée à une première extrémité du deuxième segment de liaison 42 par la liaison horizontale G'.

Une deuxième extrémité du deuxième segment de liaison 42 est reliée à une première extrémité du troisième segment vertical 38 par la liaison horizontale H.

Une deuxième extrémité du troisième segment vertical 38 est reliée à une deuxième extrémité du bras de sortie 22 par la liaison horizontale D.

L'axe du troisième segment vertical 38 est ainsi également l'axe vertical.

L'effecteur 10 est relié au troisième segment vertical 38 par l'intermédiaire de la liaison verticale 9P.

Plus précisément, l'effecteur 10 est solidaire d'un axe 44 de la liaison verticale 9P. En outre, un châssis 46 de la liaison verticale 9P, mobile en rotation autour de l'axe 44, est solidaire du troisième segment vertical 38.

Ainsi, le double parallélogramme 14 est propre à, ou en d'autres termes adapté à, maintenir l'axe 44 de la liaison 9P parallèle à l'axe vertical durant le fonctionnement du bras articulé 2.

Le dispositif d'équilibrage 4 comporte un segment d'actionnement 48, un bras de levier 50, un système de stockage d'énergie 52 et un système de support 54. Le dispositif d'équilibrage comporte en outre un moteur (non représenté).

Le bras de levier 50 présente une longueur variable et ajustable pour atteindre une longueur de fonctionnement choisie pour l'équilibrage d'une charge de masse donnée.

Comme illustré sur la figure 1, le bras de levier 50 comporte un premier segment 56 et un deuxième segment 58, reliés entre eux par une liaison glissière K, de sorte que les axes du premier segment 56 et du deuxième segment 58 sont parallèles, avantageusement confondus.

Plus précisément, une première extrémité du premier segment 56 est reliée à une première partie de la liaison glissière K, et une deuxième extrémité du deuxième segment 58 est reliée à une deuxième partie de la liaison glissière K qui est mobile en translation par rapport à la première partie de la liaison glissière K.

Le moteur est propre à, ou en d'autres termes adapté à, agir sur les segments 56, 58 pour ajuster la longueur du bras de levier 50.

Le système de support 54 est propre à, ou en d'autres termes adapté à, supporter le segment d'actionnement 48, le bras de levier 50 et le système de stockage d'énergie 52.

Le système de support 54 comporte une liaison glissière N et une liaison glissière Q. Une première partie de la liaison glissière N est reliée à une première partie de la liaison glissière Q, et solidaire de ladite première partie de la liaison glissière Q.

L'axe de la liaison glissière Q est l'axe vertical. En outre, l'axe de la liaison glissière N est parallèle à la direction du vecteur $x_0$.

Une deuxième partie de la liaison glissière Q, mobile en translation par rapport à la première partie de la liaison glissière Q, est solidaire du premier segment vertical 34. En particulier, la liaison glissière Q supporte le poids du bras de levier 50, du système de stockage d'énergie 52 et des autres éléments du système de support 54.

Avantageusement, le dispositif d'équilibrage 4 comprend une unité (non représentée) de compensation du poids supporté par la liaison glissière Q, c'est-à-dire de compensation du poids du bras de levier 50 du système de stockage d'énergie 52 et des autres éléments du système de support 54.

Le système de stockage d'énergie 52 comprend un segment libre 60, un segment de support 62 et un ressort 64.

Une première extrémité du segment libre 60 est solidaire d'une première extrémité du segment de support 62, de sorte que les axes associés au segment libre 60 et au segment de support 62 sont orthogonaux, l'axe du segment libre 60 étant l'axe vertical.

Une deuxième extrémité du segment de support 62 est en outre solidaire d'une deuxième partie de la liaison glissière K, mobile en translation par rapport à la première partie de la liaison glissière K.

En outre, la première extrémité du segment de support 62 est reliée par une liaison horizontale L à une première extrémité du deuxième segment 58 du bras de levier 50.

Le ressort 64 présente une raideur k.

De préférence, le ressort 64 est un ressort de type « ressort linéaire », c'est-à-dire un ressort dont la longueur sans charge est nulle. Un tel ressort linéaire permet un équilibrage parfait du poids de la charge variable portée par le bras articulé 2. Un tel ressort est classiquement connu. Différents modes de réalisation d'un ressort linéaire sont connus. Par exemple, un tel ressort est réalisé à l'aide de poulies et de courroies.

En variante, le ressort 64 est un ressort dont la longueur sans charge est non nulle.

Le ressort 64 comporte une première extrémité et une deuxième extrémité.

Une première extrémité du ressort 64 est fixée au segment libre 60 en un point R. En outre, une deuxième extrémité du ressort 64 est fixée au deuxième segment 58 du bras de levier 50 en un point S.

Une première extrémité du segment d'actionnement 48 est reliée par une liaison horizontale J à une deuxième extrémité du premier segment 56 du bras de levier 50.

En outre, une deuxième extrémité du segment d'actionnement 48 est solidaire du segment d'entrée 20. De préférence, l'axe du segment d'actionnement 48 est confondu avec l'axe du segment d'entrée 20. Le segment d'actionnement 48 est fixé au segment d'entrée 20 de sorte que la liaison horizontale E se trouve entre les liaisons horizontales J et F.

Le dispositif d'équilibrage 4 comporte en outre des freins (non représentés) pour bloquer indépendamment les liaisons glissières K, N, Q et la liaison horizontale L.

Par la suite, le point d'intersection de l'axe d'une liaison horizontale 8 avec le plan vertical sera désigné par la référence de ladite liaison horizontale 8.

Le point J de la liaison horizontale J forme un point d'entrée J. En outre, le point D de la liaison horizontale D forme un point de sortie D.

Le segment d'actionnement 48 présente une longueur telle que le point d'entrée J, le point de sortie D et le point B de la liaison horizontale B sont alignées.

Avantageusement, les points J, L et S sont alignés.

Le bras articulé 2 et le dispositif d'équilibrage 4 sont tels qu'un déplacement du point d'entrée J d'un vecteur $\vec{v}$ se traduit par un déplacement du point de sortie D d'un vecteur $-p\vec{v}$, où $p$ est appelé « facteur d'amplification » est et défini par :

$$p = \frac{l_{EB}}{l_{CD}} \quad (1)$$

avec $l_{EB}$ la distance entre les points E et B et $l_{CD}$ la distance entre les points C et D.

Le segment d'actionnement 48 forme ainsi un élément d'actionnement du dispositif d'équilibrage 4.

En outre, le segment d'entrée 20 un élément d'entrée du bras articulé 2.

Le fonctionnement de l'appareil de manipulation 1 va maintenant être décrit.

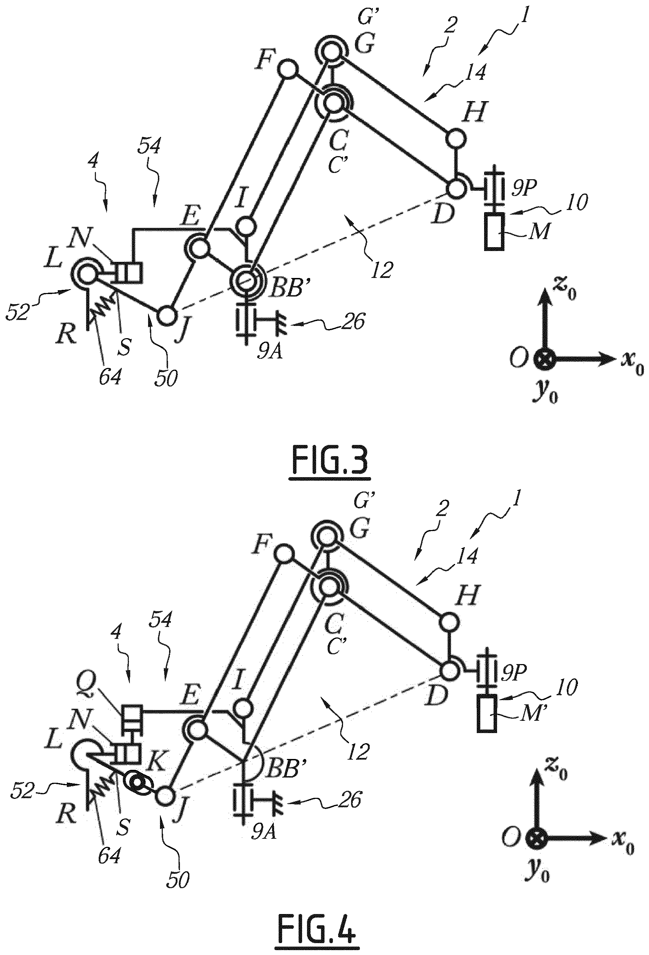

Comme illustré par la figure 3, durant une première étape de fonctionnement de l'appareil de manipulation 1, le bras articulé 2 supporte une première charge M de masse $m_P$ qui est fixée à l'effecteur 10.

Une force de pesanteur de norme $m_P.g$ et dirigée vers le bas s'exerce sur l'effecteur 10, donc sur le point de sortie D, g étant l'accélération locale de la pesanteur.

Durant la première étape de fonctionnement, le dispositif d'équilibrage 4 est tel que l'appareil de manipulation 1 est équilibré.

La liaison glissière K est bloquée, de sorte que la longueur du bras de levier 50 est fixe.

En outre, la liaison glissière Q est bloquée, de sorte que la position de la première partie de la liaison glissière N est fixe par rapport au point B.

Dans la première étape de fonctionnement, le dispositif d'équilibrage 4 exerce sur le point d'entrée J une force qui compense le poids de la première charge M qui s'applique sur le point de sortie D. Ainsi, une force de norme $p.m_P.g$ dirigée vers le bas s'exerce sur le point d'entrée J.

Le poids au point de sortie D étant compensé, la longueur du bras de levier 50 vérifie la relation suivante :

$$p.g.m_P.l_{LJ} = k.l_{LR}.l_{LS} \quad (2)$$

La longueur $L_{LJ}$ est alors appelée « longueur d'équilibrage ».

De façon connue, l'énergie potentielle du dispositif d'équilibrage 4 est égale, à une constante près, à :

$$V_{\text{tot}_m} = p.g.m_P.l_{LJ}.\cos\varepsilon + \frac{1}{2}.k.(l_{LR}^2 + l_{LS}^2 - 2.l_{LR}.l_{LS}.\cos\varepsilon) \quad (3)$$

où $\varepsilon$ est la valeur de l'angle $\widehat{RLJ}$.

La relation (3), en combinaison avec la relation (2), indique que l'énergie totale $V_{\text{tot}_m}$ est constante, quelle que soit la valeur de l'angle $\varepsilon$, c'est-à-dire quelle que soit la position du point d'entrée J, donc quelle que soit la position du point de sortie D et de l'effecteur 10 . Ainsi, le bras articulé 2 est propre à, ou en d'autres termes adapté à, déplacer l'effecteur 10 sans apport d'énergie pour compenser le poids la première charge M.

Le bras articulé 2 est ensuite manoeuvré pour déplacer la charge M, par exemple pour amener la première charge M à un point de déchargement.

Une telle manoeuvre est possible car la liaison horizontale L et la liaison glissière N sont débloquées et autorisent le déplacement du point d'entrée J dans le plan vertical.

Les déplacements du point de sortie D entraînent, par l'intermédiaire du point d'entrée J, la variation de la longueur du ressort 64.

Ainsi, durant le déplacement de la charge M, le ressort 64 stocke ou libère une partie du travail de la force appliquée par le bras de levier 50 au point d'entrée J.

Durant une deuxième étape de fonctionnement de l'appareil de manipulation 1, le bras articulé 2 et le dispositif d'équilibrage 4 sont configurés pour le remplacement de la première charge M de masse $m_P$ par une deuxième charge M' de masse $m'_P$ différente de la masse $m_P$.

A cet effet, les liaisons horizontales B, B' sont bloquées, comme représenté sur la figure 4. Dans ce cas, la position du point de sortie D ne peut pas varier. Par conséquent, la position du point d'entrée J ne peut également pas varier.

La liaison horizontale L du dispositif d'équilibrage est également bloquée, de sorte que la longueur du ressort 64 est maintenue fixe. La liaison horizontale L étant bloquée, l'énergie du ressort 64 est conservée et ne se dissipe pas.

En outre, les liaisons glissières K et Q sont débloquées.

La deuxième charge M' est fixée à l'effecteur 10 pour remplacer la première charge M.

Puis, le moteur du bras de levier 50 est actionné et la longueur du bras de levier 50 est modifiée de sorte que la nouvelle longueur $l'_{LJ}$ du bras de levier 50 vérifie la relation :

$$p.g.m'_{P}.l'_{LJ} = p.g.m_{P}.l_{LJ} \quad (4)$$

Une telle variation de longueur du bras de levier 50 est possible car les deux liaisons glissières N et Q sont débloquées.

En variante, un opérateur modifie manuellement la longueur du bras de levier 50.

Avantageusement, l'axe de la liaison glissière N est perpendiculaire à l'axe de la liaison glissière Q. Ainsi, lorsque la liaison L est bloquée, la variation de la longueur du bras de levier 50 conduit à un déplacement de la première extrémité du deuxième segment 58 qui se décompose en deux translations indépendantes selon l'axe vertical et l'axe parallèle à la direction du vecteur $x_0$. La perpendicularité des axes des liaisons N et Q permet une meilleure transmission du mouvement de la première extrémité du deuxième segment 58 et une meilleure transmission des efforts internes.

Une force dirigée vers le bas et de norme $p.m'_p.g$ est ainsi appliquée au point J.

La nouvelle énergie totale du dispositif d'équilibrage 4 vaut :

$$V'_{\text{tot}_m} = p.g.m'_{P}.l'_{LJ}.\cos\varepsilon + \frac{1}{2}.k.(l_{LR}^2 + l_{LS}^2 - 2.l_{LR}.l_{LS}.\cos\varepsilon) \quad (5)$$

Or, d'après les relations (2) et (4), la nouvelle longueur $l'_{LJ}$ du bras de levier 50 vérifie la relation suivante :

$$p.g.m'_{P}.l'_{LJ} = k.l_{LR}.l_{LS} \quad (6)$$

Par conséquent, la nouvelle énergie totale du dispositif d'équilibrage 4 vaut :

$$V'_{\text{tot}_m} = p.g.m_{P}.l_{LJ}.\cos\varepsilon + \frac{1}{2}.k.(l_{LR}^2 + l_{LS}^2 - 2.l_{LR}.l_{LS}.\cos\varepsilon) = V_{\text{tot}_m} \quad (7)$$

L'énergie totale du dispositif de compensation 4 n'a donc pas varié au cours du remplacement de la première charge M par la deuxième charge M'.

Pour manipuler la charge M', les liaisons du bras articulé 2 sont ensuite débloquées. En outre, les liaisons glissières K et Q sont bloquées. L'appareil de manipulation 1 est alors dans une configuration analogue à la configuration de la figure 1.

En variante, le bras de levier 50 est dépourvu de moteur. La variation de la longueur du bras de levier 50 est alors assurée par un moteur équipant l'une des liaisons glissières K ou Q.

Avantageusement, le dispositif d'équilibrage de charge selon l'invention est apte à fonctionner pour des charges de masse variable, avec un seul moteur et un seul ressort.

En variante, le bras articulé 2 ne comporte pas de pantographe. Le bras articulé 2 présente un facteur d'amplification p qui est fonction de la configuration dudit bras articulé 2. Dans ce cas, lorsque le dispositif d'équilibrage 4 compense le poids exercé par la charge M, M' sur le bras articulé 2, le bras de levier 50 présente une longueur d'équilibrage $l_{LJ}$ vérifiant la relation :

$$p.g.m_{P}.l_{LJ} = k.l_{LR}.l_{LS}$$

où g est l'accélération locale de la pesanteur, $m_P$ est la masse de la charge M, $k$ est la raideur du ressort 64, $l_{LR}$ étant la distance entre le premier point R du segment libre 60 et la liaison pivot L, $l_{LS}$ étant la distance entre le deuxième point S du bras de levier 50 et la liaison pivot L.

Dans un tel mode de réalisation, une longueur d'équilibrage $l_{LJ}$ est par exemple fixée pour une première valeur du facteur d'amplification p correspondant à une première configuration du bras articulé 2. L'équilibrage du bras articulé 2, pour les configurations du bras articulé 2 présentant un facteur d'amplification qui est différent du premier facteur d'amplification p, est imparfait, mais conduit toutefois à une consommation d'énergie moindre que pour un bras articulé de l'état de la technique.

Ainsi, le dispositif d'équilibrage 4 autorise un fonctionnement du bras articulé 2 conduisant à une dépense minimale d'énergie, par exemple lors du déplacement de charges variables. Le dispositif d'équilibrage 4 selon l'invention permet donc d'économiser l'énergie consommée par le bras articulé 2.

**Revendications**

1. Dispositif (4) d'équilibrage de charge pour un bras articulé (2) propre à recevoir une charge (M, M') présentant une masse ($m_P$, $m'_P$), le dispositif d'équilibrage (4) comportant un système de support (54) propre à être fixé à un élément fixe (34) du bras articulé (2), et un élément d'actionnement (48) propre à être fixé à un élément d'entrée (20) mobile du bras articulé (2),
le dispositif d'équilibrage (4) comportant en outre un bras de levier (50) propre à exercer une force sur l'élément d'actionnement (48) pour appliquer ladite force à l'élément d'entrée (20) du bras articulé (2), le bras de levier (50) présentant une longueur ($l_{LJ}$) ajustable en fonction de la masse ($m_P$, $m'_P$) de la charge (M, M'), le dispositif d'équilibrage (4) comportant en outre un système de stockage d'énergie (52) pour stocker au moins une partie du travail de la force exercée par le bras de levier (50) sur l'élément d'actionnement (48),
**caractérisé en ce que** le système de support (54) comporte une première liaison glissière (N) et une deuxième liaison glissière (Q), une première partie de la première liaison glissière (N) étant reliée à une première partie de la deuxième liaison glissière (Q), et solidaire de ladite première partie de la deuxième liaison glissière (Q), une deuxième partie de la deuxième liaison glissière (Q), mobile en translation par rapport à la première partie de la deuxième liaison glissière (Q), étant propre à être fixée à l'élément fixe (34) du bras articulé (2), une deuxième partie de la première liaison glissière (N), mobile en translation par rapport à la première partie de la première liaison glissière (N), étant reliée à une extrémité du bras de levier (50) par l'intermédiaire d'une liaison pivot (L).

2. Dispositif (4) selon la revendication 1, **caractérisé en ce que** le système de stockage d'énergie (52) est propre à être bloqué pour conserver l'énergie stockée dans ledit système de stockage (52).

3. Dispositif (4) selon la revendication 1 ou 2, **caractérisé en ce que** l'axe de la première liaison glissière (N) est perpendiculaire à l'axe de la deuxième liaison glissière (Q).

4. Dispositif (4) selon la revendication 2, **caractérisé en ce que** le système de stockage d'énergie (52) comporte un segment libre (60) et un ressort (64), l'une des extrémités du segment libre (60) étant reliée à une première extrémité du bras de levier (50) par une liaison pivot (L), une première extrémité du ressort (64) étant reliée en un premier point (R) au segment libre (60) et une deuxième extrémité du ressort (64) étant reliée en un deuxième point (S) au bras de levier (50).

5. Appareil (1) de manipulation de charges comportant un bras articulé (2), le bras articulé (2) comprenant un élément fixe (34) et un élément d'entrée (20) mobile, l'appareil de manipulation (1) étant **caractérisé en ce qu'**il comporte en outre un dispositif d'équilibrage (4) selon l'une quelconque des revendications 1 à 4, le système de support (54) du dispositif d'équilibrage (4) étant fixé à l'élément fixe (34) du bras articulé (2), et l'élément d'actionnement (48) du dispositif d'équilibrage (4) étant fixé à l'élément d'entrée (20) du bras articulé (2).

6. Appareil selon la revendication 5 comportant un dispositif d'équilibrage selon la revendication 4, **caractérisé en ce que** le bras articulé (2) présente un facteur d'amplification p qui est fonction de la configuration dudit bras articulé (2), et **en ce que**, lorsque le dispositif d'équilibrage (4) compense le poids exercé par la charge (M, M') sur le bras articulé, le bras de levier (50) présente une longueur d'équilibrage ($l_{LJ}$) vérifiant la relation :

$$p.g.m_P.l_{LJ} = k.l_{LR}.l_{LS}$$

où g est l'accélération locale de la pesanteur, $m_P$ est la masse de la charge (M), $k$ est la raideur du ressort (64), $l_{LR}$ étant la distance entre le premier point (R) du segment libre (60) et la liaison pivot (L), $l_{LS}$ étant la distance entre le deuxième point (S) du bras de levier (50) et la liaison pivot (L).

7. Procédé de manipulation de charges mettant en oeuvre un appareil de manipulation selon la revendication 6, **caractérisé en ce qu'**il comporte une première étape d'équilibrage comprenant les phases de :

- blocage du bras articulé (2) ;

- blocage du système de stockage d'énergie (52) ;
- déblocage du système de support (54) ;
- fixation d'une charge (M, M') à un effecteur (10) du bras articulé (2) ;
- modification de la longueur du bras de levier (50) pour atteindre la longueur d'équilibrage ($l_{LJ}$) associée à la charge (M, M').

8. Procédé de manipulation de charges selon la revendication 7, **caractérisé en ce qu'**il comporte en outre une étape de déplacement de la charge (M, M') comportant les phases de :

- déblocage du bras articulé (2) ;
- déblocage du système de stockage d'énergie (52) ;
- blocage du bras de levier (50) à la longueur d'équilibrage ($l_{LJ}$) associée à la charge (M, M') ;
- blocage de la deuxième liaison glissière (Q) du système de support (54).

**Patentansprüche**

1. Lastausgleichsvorrichtung (4) für einen Gelenkarm (2), welcher geeignet ist, eine Last (M, M') zu empfangen, die eine Masse ($m_p$, $m'_p$) darstellt, wobei die Ausgleichsvorrichtung (4) ein Stützsystem (54), welches geeignet ist, um an einem Fixierelement (34) des Gelenkarms (2) fixiert zu sein, und ein Betätigungselement (48) aufweist, welches geeignet ist, um an einem bewegbaren Eingabeelement (20) des Gelenkarms (2) fixiert zu sein, wobei die Ausgleichsvorrichtung (4) weiter einen Hebelarm (50) aufweist, welcher geeignet ist, um eine Kraft auf das Betätigungselement (48) auszuüben zum Aufbringen der Kraft auf das bewegbare Eingabeelement (20) des Gelenkarms (2), wobei der Hebelarm (50) eine Länge ($l_{LJ}$) hat, welche entsprechend der Masse ($m_p$, $m'_p$) der Last (M, M') einstellbar ist, wobei die Ausgleichsvorrichtung (4) weiter ein Energiespeichersystem (52) zum Speichern von zumindest einem Teil der Arbeitskraft aufweist, welche durch den Hebelarm (50) auf das Betätigungselement (48) ausgeübt wird, **dadurch gekennzeichnet, dass** das Stützsystem (54) eine erste Gleitverbindung (N) und eine zweite Gleitverbindung (Q) aufweist, ein erster Teil der ersten Gleitverbindung (N) mit einem ersten Teil der zweiten Gleitverbindung (Q) verbunden ist und mit dem ersten Teil der zweiten Gleitverbindung (Q) fest verbunden ist, ein zweiter Teil der zweiten Gleitverbindung (Q), welcher mit Bezug auf den ersten Teil der zweiten Gleitverbindung (Q) translatorisch bewegbar ist, geeignet ist, um am Fixierelement (34) des Gelenkarms (2) fixiert zu sein, ein zweiter Teil der ersten Gleitverbindung (N), welcher mit Bezug auf den ersten Teil der ersten Gleitverbindung (N) translatorisch bewegbar ist, mit einem Ende des Hebelarms (50) durch eine Schwenkverbindung (L) verbunden ist.

2. Vorrichtung (4) gemäß Anspruch 1, **dadurch gekennzeichnet, dass** das Energiespeichersystem (52) geeignet ist, um zum Konservieren der im Speichersystem (52) gespeicherten Energie blockiert zu sein.

3. Vorrichtung (4) gemäß Anspruch 1 oder 2, **dadurch gekennzeichnet, dass** die Achse der ersten Gleitverbindung (N) zur Achse der zweiten Gleitverbindung (Q) senkrecht ist.

4. Vorrichtung (4) gemäß Anspruch 2, **dadurch gekennzeichnet, dass** das Energiespeichersystem (52) ein freies Segment (60) und eine Feder (64) aufweist, eines der Enden des freien Segments (60) mit einem ersten Ende des Hebelarms (50) über eine Schwenkverbindung (L) verbunden ist, ein erstes Ende der Feder (64) mit einem ersten Punkt (R) des freien Segments (60) verbunden ist und ein zweites Ende der Feder (64) mit einem zweiten Punkt (S) des Hebelarms (50) verbunden ist.

5. Last-Handhabungsgerät (1), welches einen Gelenkarm (2) aufweist, wobei der Gelenkarm (2) ein Fixierelement (34) und ein bewegbares Eingabeelement (20) aufweist, wobei das Handhabungsgerät (1) **dadurch gekennzeichnet ist, dass** es weiter eine Ausgleichsvorrichtung (4) gemäß irgendeinem der Ansprüche 1 bis 4 aufweist, das Stützsystem (54) der Ausgleichsvorrichtung (4) am Fixierelement (34) des Gelenkarms (2) fixiert ist und das Betätigungselement (48) der Ausgleichsvorrichtung (4) am Eingabeelement (20) des Gelenkarms (2) fixiert ist.

6. Gerät gemäß Anspruch 5, eine Ausgleichsvorrichtung gemäß Anspruch 4 aufweisend, **dadurch gekennzeichnet, dass** der Gelenkarm (2) einen Verstärkungsfaktor p aufweist, welcher der Konfiguration des Gelenkarms (2) entspricht, und dass, wenn die Ausgleichsvorrichtung (4) das durch die Last (M, M') auf den Gelenkarm ausgeübte Gewicht kompensiert, der Hebelarm (50) eine Ausgleichslänge ($l_{LJ}$) hat, welche die Beziehung erfüllt:

$$p.g.m_p.l_{LJ} = k.l_{LR}.l_{LS}$$

worin g die örtliche Fallbeschleunigung ist, $m_p$ die Masse der Last (M) ist, k die Steifigkeit der Feder (64) ist, $l_{LR}$ die Distanz zwischen dem ersten Punkt (R) des freien Segments (60) und der Schwenkverbindung (L) ist, $l_{LS}$ die Distanz zwischen dem zweiten Punkt (S) des Hebelarms (50) und der Schwenkverbindung (L) ist.

7. Verfahren des Handhabens von Lasten, realisiert durch ein Handhabungsgerät gemäß Anspruch 6, **dadurch gekennzeichnet, dass** es einen ersten Schritt des Ausgleichens aufweist, welcher die Phasen aufweist:

   - Blockieren des Gelenkarms (2),
   - Blockieren des Energiespeichersystems (52),
   - Freigeben des Stützsystems (54),
   - Fixieren einer Last (M, M') an einem Effektor (10) des Gelenkarms (2),
   - Modifizieren der Länge des Hebelarms (50) zum Erhalten der Ausgleichslänge ($l_{LJ}$), welche mit der Last (M, M') assoziiert ist.

8. Verfahren des Handhabens von Lasten gemäß Anspruch 7, **dadurch gekennzeichnet, dass** es weiter einen Schritt des Umsetzens der Last (M, M') aufweist, welcher die Phasen aufweist:

   - Freigeben des Gelenkarms (2),
   - Freigeben des Energiespeichersystems (52),
   - Blockieren des Hebelarms (50) in der Ausgleichslänge ($l_{LJ}$), welche mit der Last (M, M') assoziiert ist,
   - Blockieren der zweiten Gleitverbindung (Q) des Stützsystems (54) .

**Claims**

1. A load-balancing device (4) for an articulated arm (2) able to receive a load (M, M') having a weight ($m_P$, $m'_P$), the balancing device (4) comprising a support system (54) able to be fastened to a stationary element (34) of the articulated arm (2), and an actuator element (48) able to be attached to a movable input element (20) of the articulated arm (2),
   the balancing device (4) further comprising a lever arm (50) able to exert a force on the actuator element (48) in order to apply said force on the input element (20) of the articulated arm (2), the lever arm (50) having an adjustable length ($l_{LI}$) as a function of the weight ($m_P$, $m'_P$) of the load (M, M'),
   the balancing device (4) further comprising an energy storage system (52) for storing at least part of the work of the force exerted by the lever arm (50) on the actuator element (48),
   **characterized in that** the support system (54) comprises a first sliding connection (N) and a second sliding connection (Q), a first part of the first sliding connection (N) being connected to a first part of the second sliding connection (Q), and secured to said first part of the second sliding connection (Q), a second part of the second sliding connection (Q), translatable relative to the first part of the second sliding connection (Q) being able to be fastened to the stationary element (34) of the articulated arm (2), a second part of the first sliding connection (N), translatable relative to the first part of the first sliding connection (N) being connected to an extremity of the lever arm (50) by a pivot link (L).

2. The device (4) according to claim 1, **characterized in that** the energy storage system (52) is able to be blocked to retain the energy stored in said storage system (52).

3. The device (4) according to claim 1 or 2, **characterized in that** the axis of the first sliding connection (N) is perpendicular to the axis of the second sliding connection (Q).

4. The device (4) according to claim 2, **characterized in that** the energy storage system (52) includes a free segment (60) and a spring (64), one of the ends of the free segment (60) being connected to a first end of the lever arm (50) by a pivot link (L), a first end of the spring (64) being connected at a first point (R) to the free segment (60) and a second end of the spring (64) being connected at a second point (S) to the lever arm (50).

5. A load-handling apparatus (1) including an articulated arm (2), the articulated arm (2) comprising a stationary element (34) and a movable input element (20), the handling apparatus (1) being **characterized in that** it further includes a balancing device (4) according to any one of claims 1 to 4, the support system (54) of the balancing device (4) being fastened to the stationary element (34) of the articulated arm (2), and the actuator element (48) of the balancing device (4) being fastened to the input element (20) of the articulated arm (2).

6. The apparatus according to claim 5 comprising an energy storing device according to claim 4, **characterized in that** the articulated arm (2) has an amplification factor p that is a function of the configuration of said articulated arm (2), and **in that**, when the balancing device (4) compensates the weight exerted by the load (M, M') on the articulated arm, the lever arm (50) has a balancing length ($l_{LJ}$) verifying the relationship:

$$p.g.m_P.l_{LJ} = k.l_{LR}.l_{LS}$$

where g is the local gravity acceleration, $m_P$ is the weight (M) of the load, $k$ is the stiffness of the spring (64), $l_{LR}$ is the distance between the first point (R) of the free segment (60) and the pivot link (L), $l_{LS}$ being the distance between the second point (S) of the lever arm (50) and the pivot link (L).

7. A load-handling method implementing a handling apparatus according to claim 6, **characterized in that** it includes a first balancing step comprising the following phases:

   - blocking the articulated arm (2);
   - blocking the energy storage system (52);
   - unblocking the support system (54);
   - fastening a load (M, M') to an effector (10) of the articulated arm (2);
   - modifying the length of the lever arm (50) to achieve the balancing length ($l_{LJ}$) associated with the load (M, M').

8. The load-handling method according to claim 7, **characterized in that** it further includes a step of moving the load (M, M') including the following phases:

   - unblocking the articulated arm (2);
   - unblocking the energy storage system (52);
   - blocking the lever arm (50) at the balancing length ($l_{LJ}$) associated with the load (M, M');
   - blocking the second sliding connection (Q) of the support system (54).

FIG.1

FIG.2

FIG.3

FIG.4

13

**EP 3 233 391 B1**

## RÉFÉRENCES CITÉES DANS LA DESCRIPTION

**Documents brevets cités dans la description**

- EP 1154109 A1
- FR 2533284 A1
- US 4753128 A1
- NL 1034141 C1
- US 2545515 A